# EUROPEAN PATENT APPLICATION

(11) **EP 4 300 798 A1**
(43) Date of publication of application: **03.01.2024**
(21) Application number: 22181955.0
(22) Date of filing: 29.06.2022
(51) Int. Cl.: H02M 1/42, H02M 3/335, H05B 45/382

(54) **RESONANT POWER CONVERTER**

(71) Applicant: EFPS Ltd., 3105 Limassol (CY)
(72) Inventor: Nebesnyi, Valerii, Limassol (CY)
(74) Representative: Grünecker Patent- und Rechtsanwälte PartG mbB

(57) **Abstract**

A resonant power converter for converting a first voltage to a second voltage and/or vice versa, the first voltage being provided between a first terminal and a second terminal, the second voltage being provided between a third terminal and a fourth terminal, the power converter comprising: a resonant circuit comprising a resonant inductance (L_{R}) and a resonant capacitance (C_{R}) connected in series between a first node (A) and a second node (B); a first low pass filter with a first port connected to the first and the second terminals and a second port connected to the first and the second nodes (A, B), the low pass filter having a cut-off frequency lower than a resonant frequency of the resonant circuit; a first switched capacitance circuit, the switched capacitance circuit comprising at least one capacitor (C1, C1a, C1b) and a plurality of switches (S1, ..., S4, S2a, S4a) configured for selectively connecting the at least one capacitor in at least either one of a first configuration and a second configuration to the first node (A) and the second node (B), thereby applying at least either one of a positive voltage and a negative voltage to the resonant circuit, the positive voltage and the negative voltage being based on a charge stored in the at least one capacitor; a rectifier/inverter circuit for converting a resonant AC current flowing through the resonant circuit into the second voltage and/or vice versa; a transformer (Tr) for coupling the resonant circuit and the rectifier/inverter circuit; and a controller for controlling the plurality of switches, wherein the first voltage is an AC voltage with a first frequency lower than the resonant frequency of the resonant circuit and the second voltage is a DC voltage or an AC voltage with a second frequency lower than the resonant frequency of the resonant circuit.

## Description

### TECHNICAL FIELD

The present disclosure relates to resonant power converters, and in particular to single-stage AC/DC and AC/AC converters with power factor correction.

### BACKGROUND

AC/DC converters with power factor correction (PFC) are usually realized by using, in a first stage, a full bridge rectifier together with a boost converter to control the input current waveform to be sinusoidal and in phase with the input voltage waveform. The first stage is then followed by an isolated DC/DC converter to provide galvanic isolation and output voltage regulation.

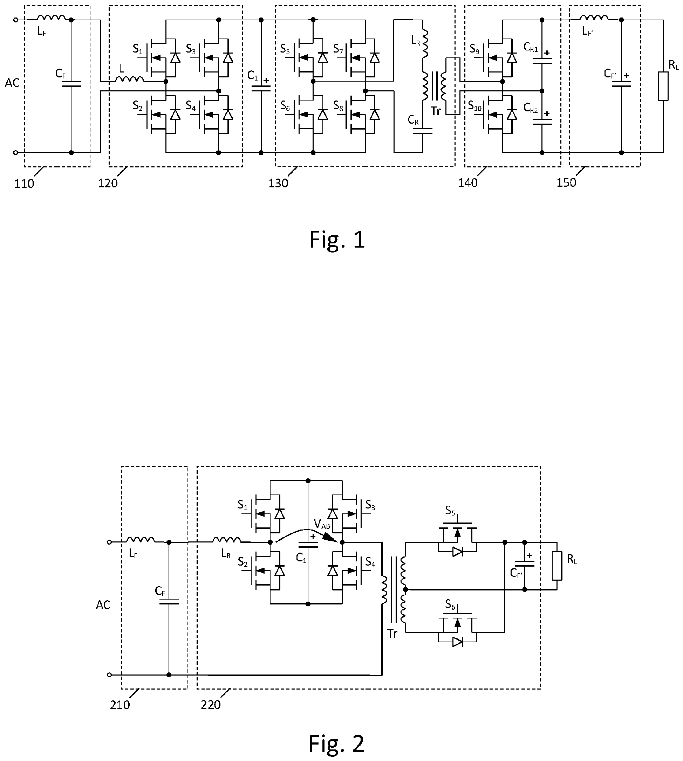

Fig. 1 shows an example for such a conventional AC/DC converter with separate stages for power-factor correction and resonant power conversion. A first H-bridge with switching elements S1-S4 and an inductor L are used in PFC stage 120 for rectifying the input AC voltage and for performing power factor correction. A DC link with a storage capacitor C1 connects the output of the PFC stage 120 with the input of a resonant power converter 130. An inverter with a set of four switches S5-S8 in full-bridge configuration is used to drive a resonant tank, which is a series connection of an resonant inductor L_{R} and a resonant capacitor C_{R}. A transformer Tr with a primary winding connected in series to the resonant tank is used for isolating the input side and the output side of the power converter. At the secondary side, a switched rectifier 140 in half-bridge configuration rectifies the high-frequency output current. An input filter 110 and an output filter 150 at the input and the output stage are used to isolate the power source and the load RL from the high-frequency currents generated during switching operation.

Each individual stage of the conventional AC/DC converter further increases circuit complexity, component costs and switching losses. Also the storage capacitor C1 in the DC bridge is problematic in terms of component costs, durability, and packaging size. Attempts have thus been made to improve the conventional multi-stage AC/DC converter, and in particular to combine power factor correction and resonant power conversion in one converter stage.

Fig. 2 shows a circuit diagram of a single-stage AC/DC converter disclosed in the article "The Proposal of Isolated Single-Stage AC-DC Converter" by S. Maekawa at al. (Electrical Engineering in Japan, Vol. 204, No. 1, 2018). A converter stage 220 comprises an H-bridge with switching elements S1-S4 and a capacitor C1. The H-bridge is connected in series with a reactor L_{R} and the primary winding of a transformer Tr. The reactor L_{R} is provided to carry out soft switching of the switching elements S1-S4 by resonating with the capacitor C_{F} of the input filter 210.

With this circuit, power-factor correction (PFC) and resonant power conversion can be achieved with a single H-bridge which uses the fundamental wave component generated by switching to control the input current, and the carrier frequency component to control the resonant transmission of power to the isolation transformer Tr. Specifically, the H-bridge is modulated to a 50 Hz sinusoidal wave, and the differential voltage between the output voltage V_{AB} and the input voltage V_{AC} is applied to the primary winding of the transformer Tr. The resulting input current I_{AC} is controlled so as to be in-phase with the input voltage V_{AC} to realize PFC operation. A synchronous rectifier with switching elements S5-S6 at the secondary side of the transformer Tr converts the high-frequency AC voltage to a DC voltage for supplying the load R_{L}.

As compared to the conventional AC/DC converter with separate PFC and conversion stages, the number of switching elements on the primary side is significantly reduced and therewith also the switching losses caused by a finite drain-source resistance in the ON state (R_{DSON}). However, the disadvantage of this circuit over the conventional multi-stage AC/DC converter is that the transformer is not isolated against the low-frequency input voltage. In order to eliminate the resulting voltage ripples at the secondary side, a large capacitance C_{F}' is thus required at the output side as an auxiliary energy storage.

### SUMMARY OF THE INVENTION

It is thus an object of the present invention to provide a resonant power converter that overcomes the above problems in the prior art. Specifically, it is an object of the invention to provide a resonant power converter with reduced switching losses, reduced circuit complexity, and reduced component costs. It is a further object to provide a resonant power converter that can perform power factor correction without a separate PFC stage. It is a further object to provide a bi-directional resonant power converter with low circuit complexity.

This is achieved by the features of the independent claims. Preferred embodiments are subject matter of the dependent claims.

It is the particular approach of the present invention to provide a switched capacitance circuit in parallel to the resonant tank to selectively apply one of at least a positive and a negative voltage to both the resonant tank and the output side of the input filter. A low-frequency component and a high-frequency component of the switched voltage may then be used for independently controlling the power factor at the AC input side and the resonant energy transfer to the DC output side of the converter. This mechanism is fully reversible, so that electric energy may likewise be transferred in the opposite direction, thus providing a DC/AC converter or a bidirectional converter without modifications to the circuit topology.

According to a first aspect of the present invention, there is provided a resonant power converter for converting a first voltage provided between a first terminal and a second terminal to a second voltage provided between a third terminal and a fourth terminal, and/or vice versa. The power converter comprises a resonant circuit with a resonant inductance and a resonant capacitance connected in series between a first node and a second node. The power converter further comprises a first low pass filter with a first port connected to the first and the second terminals and a second port connected to the first and the second nodes, wherein the low pass filter has a cut-off frequency lower than a resonant frequency of the resonant circuit. The power converter further comprises a first switched capacitance circuit with at least one capacitor and a plurality of switches configured for selectively connecting the at least one capacitor in at least either one of a first configuration and a second configuration to the first node and the second node, thereby applying at least either one of a positive voltage and a negative voltage to the resonant circuit, the positive voltage and the negative voltage being based on a charge stored in the at least one capacitor. The power converter further comprises a rectifier/inverter circuit for converting a resonant AC current flowing through the resonant circuit into the second voltage and/or vice versa, a transformer for coupling the resonant circuit and the rectifier/inverter circuit, and a controller for controlling the plurality of switches. The first voltage is an AC voltage with a first frequency lower than the resonant frequency of the resonant circuit and the second voltage is a DC voltage or an AC voltage with a second frequency lower than the resonant frequency of the resonant circuit.

This configuration provides a single-stage AC/DC converter that can perform power factor control and resonant energy transfer with a lower number of switching elements than the conventional two-stage converters, thus reducing power losses and improving efficiency. Moreover, since the switched capacitance circuit is connected in parallel to the resonant circuit, the at least one capacitor can be charged up to the peak resonant voltage, so that ceramic capacitors and/or polypropylene capacitors with comparatively small capacitance can be used as an energy storage. Especially for higher voltages, polypropylene capacitors may be more cost-effective than ceramic capacitors. Further, with this topology, the resonant capacitance isolates the transformer from the AC voltage, thus reducing voltage ripples at the DC output side, obviating the need for a large smoothing capacitor in the output filter as an auxiliary energy storage. Finally, this topology is fully reversible, thus allowing a bidirectional operation or operation as a DC/AC converter.

Preferably, the plurality of switches and the at least one capacitor of the first switched capacitance circuit are connected in a half-bridge configuration with a first branch of a first switch and a first capacitor connected in series and a second branch of a second switch and a second capacitor connected in series, each of the first branch and the second branch being connected in parallel to the resonant circuit.

With this configuration, only two switching elements are required at the primary side of the power converter, thus allowing for a particularly cost-effective implementation.

In another preferred embodiment, the plurality of switches and the at least one capacitor of the first switched capacitance circuit are connected in a full-bridge configuration with a first branch of a first switch and a second switch connected in series and a second branch of a third switch and a fourth switch connected in series, each of the first branch and the second branch being connected in parallel to the resonant circuit, and the at least one capacitor being connected between a centre node of the first branch and a centre node of the second branch.

With such an H-bridge configuration, a single capacitor and four switching elements suffice for implementing the switched capacitor circuit. As compared to the half-bridge configuration, a full-bridge configuration may further simplify control by opening the possibility of selectively applying also a zero voltage to the resonant circuit. The full-bridge configuration may also be advantageous for high-current applications.

In another preferred embodiment, the plurality of switches and the at least one capacitor of the first switched capacitance circuit are connected in a 3-level inverter configuration in which the at least one capacitor comprises a first capacitor and a second capacitor connected in series, and in which the plurality of switches is further configured for selectively connecting the first capacitor and the second capacitor in either one of a third configuration in which the first capacitor is connected in parallel to the resonant circuit and a fourth configuration in which the series connection of the first capacitor and the second capacitor is connected in parallel to the resonant circuit.

Additionally or alternatively, the plurality of switches of the first switched capacitor circuit may be further configured for selectively connecting the first node and the second node, thereby applying zero voltage to the resonant circuit.

In this manner, control options are further increased, thus allowing a modulated voltage applied to the resonant circuit to follow more closely a desired waveform.

Preferably, the rectifier/inverter circuit comprises either four switches in a full-bridge configuration or two switches and two capacitors in a half-bridge configuration, wherein the controller is further configured to control the switches of the rectifier/inverter circuit to convert the resonant AC current flowing through the resonant circuit into a DC current and/or vice versa.

Actively controlled switching elements in a rectifier circuit have a lower voltage drop than a diode rectifier, thus reducing power loss. Moreover, actively controlling these switching elements allows a reverse or a bidirectional operation of the power converter.

In another preferred embodiment, the rectifier/inverter circuit comprises a second switched capacitance circuit connected to the transformer, the second switched capacitance circuit comprising at least one capacitor and a plurality of switches configured for selectively connecting the at least one capacitor in either one of a first configuration and a second configuration to the transformer, thereby applying either one of a positive voltage and a negative voltage to the transformer, the positive voltage and the negative voltage being based on a charge stored in the at least one capacitor, wherein the controller is further configured to control the plurality of switches of the second switched capacitance circuit to convert the resonant AC current flowing through the resonant circuit into an AC current having the second frequency and/or vice versa.

With this configuration, a symmetric AC/AC converter can be provided for converting a first AC voltage into a second AC voltage, and/or vice versa. The first AC voltage may differ from the second AC voltage by at least one of the amplitude, the phase, and the frequency.

Here, the plurality of switches and the at least one capacitor of the second switched capacitance circuit may be connected in either one of the half-bridge configuration, the full-bridge configuration, and the 3-level inverter configuration, as discussed above in connection with the configuration of the first switched capacitance circuit. The configuration of the first switched capacitance circuit may be identical to or different from the configuration of the second switched capacitance circuit, depending on requirements.

The power converter preferably further comprises a second low pass filter with a first port connected to the rectifier/inverter circuit and a second port connected to the third and the fourth terminals, the low pass filter having a cut off frequency lower than a resonant frequency of the resonant circuit.

In this manner, a load or voltage source connected to the third and the fourth terminals is isolated from the high-frequency switching voltage generated by the switched capacitor circuit.

Preferably, the controller is configured to control the plurality of switches of the first switched capacitance circuit and/or the plurality of switches of the second switched capacitance circuit so as to modulate a low frequency component of the applied voltage and a high frequency component of the applied voltage independently of each other.

In this manner, the waveform of the current drawn at the input side and the waveform of the voltage delivered at the output side can be shaped independently of each other. Moreover, resonant energy transfer from the input to the output side can be controlled with the same switching elements at the same time.

Preferably, the controller is further configured to perform power factor control, PFC, by controlling the plurality of switches of the first switched capacitance circuit in accordance with a phase and frequency of the first voltage.

Increasing the power factor, i.e., the ratio between active power and apparent power consumed by the power converter, is generally desirable in order to reduce losses in the power grid. With this particular configuration, the power factor and the resonant energy transfer can be controlled within a single stage, i.e., the switched capacitor circuit.

Preferably, the controller is further configured to control the plurality of switches of the first switched capacitance circuit and/or the plurality of switches of the second switched capacitance circuit in accordance with a pulse-width modulation scheme or a delta-sigma modulation scheme so as to modulate a low frequency component of the applied voltage.

Pulse-width modulation and delta-sigma modulation are particularly suitable schemes for controlling the fundamental frequency of a digital signal.

Preferably, the controller is further configured to control the plurality of switches of the first switched capacitance circuit and/or the plurality of switches of the second switched capacitance circuit so as to drive the resonant circuit by modulating a high frequency component of the applied voltage in accordance with the resonant frequency of the resonant circuit. More specifically, the controller may be configured to control the plurality of switches of the first switched capacitance circuit and/or the plurality of switches of the second switched capacitance circuit in accordance with a phase shift modulation scheme or a frequency modulation scheme so as to modulate the high frequency component of the applied voltage.

In this manner, the resonant transfer of energy from the input side to the output side of the power converter can be controlled. Phase-shift modulation and frequency modulation are modulation schemes particularly suitable for this purpose.

In a particularly preferred embodiment, the power converter further comprises a second resonant circuit comprising a resonant inductance and a resonant capacitance connected in series between the second node and a third node; a third low pass filter with a first port connected to the second terminal and a fifth terminal and a second port connected to the second and the third nodes, the third low pass filter having a cut-off frequency lower than a resonant frequency of the second resonant circuit; a second rectifier/inverter circuit for converting a resonant AC current flowing through the second resonant circuit into a third voltage and/or vice versa; and a second transformer for coupling the second resonant circuit and the second rectifier/inverter circuit. Here, the plurality of switches of the first switched capacitance circuit is further configured for selectively connecting the at least one capacitor in at least either one of a fourth configuration and a fifth configuration to the second node and the third node, thereby applying at least either one of a positive voltage and a negative voltage to the second resonant circuit, the positive voltage and the negative voltage being based on a charge stored in the at least one capacitor. The first voltage is a three-phase AC voltage provided at the first terminal, the second terminal, and the fifth terminal.

With this configuration a three-phase AC voltage can be converted into a DC voltage and/or vice versa.

### BRIEF DESCRIPTION OF THE FIGURES

Examples will now be further described with reference to the figures in which:
- Fig. 1: shows a circuit diagram of a conventional AC/DC converter with separate stages for power-factor correction and resonant power conversion;
- Fig. 2: shows a circuit diagram of a conventional single-stage AC/DC converter;
- Fig. 3: shows a circuit diagram of an AC/DC power converter with a switched capacitance circuit in full-bridge configuration according to a first embodiment of the invention;
- Figs. 4A: shows a circuit diagram of a rectifier/inverter circuit;
- Figs. 4B: shows a circuit diagram of a further rectifier/inverter circuit;
- Fig. 5: shows a circuit diagram of an AC/DC power converter with a switched capacitance circuit in half-bridge configuration according to a second embodiment of the invention;
- Fig. 6: shows a circuit diagram of a power converter with a switched capacitance circuit according to a third embodiment of the invention;
- Fig. 7: shows a circuit diagram of an AC/DC power converter with a switched capacitance circuit in 3-level inverter configuration according to a fourth embodiment of the invention;
- Fig. 8: shows a circuit diagram of a symmetric AC/AC power converter with a switched capacitance circuit according to a fifth embodiment of the invention;
- Fig. 9: shows a circuit diagram of a three-phase AC/DC power converter with a switched capacitance circuit according to a sixth embodiment of the invention; and
- Fig. 10: shows an alternative circuit diagram of a three-phase AC/DC power converter with a switched capacitance circuit according to the sixth embodiment of the invention.

### DETAILED DESCRIPTION

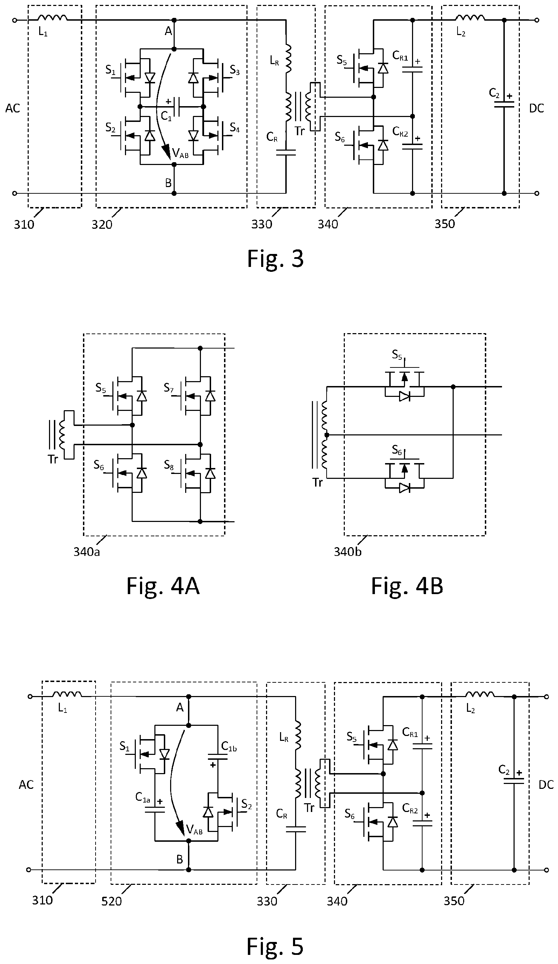

Figure 3 shows a circuit diagram of an AC/DC power converter with a switched capacitance circuit in full-bridge configuration according to a first embodiment of the invention. The power converter comprises a first filter 310, the switched capacitance circuit 320, a resonant circuit 330, a rectifier/inverter circuit 340, and a second filter 350.

The first filter 310 is a low-pass filter that connects the AC side of the power converter with the switched capacitance circuit 320. Filter 310 may thus be considered a fourpole with a first port connected to the two AC terminals and a second port connected to circuit nodes A and B.

The first filter may comprise an inductance L1 connected between a first AC terminal and a first node A. The first filter may also comprise additional components, such as a capacitance connected between the first AC terminal and a second AC terminal (not shown). The cut-off frequency of the first filter is lower than a resonant frequency of the resonant circuit 330 in order to isolate the AC side from the high-frequency switching current.

The switched capacitance circuit 320 comprises four switching elements S1-S4 and a capacitor C1 in full-bridge configuration. The capacitor C1 is connected between the centre points of two branches formed by pairwise series connected switching elements S1-S2 and S3-S4. The switched capacitance circuit 320 may thus be regarded as a twopole connected between circuit nodes A and B, i.e., in parallel to the second port of the first filter.

The resonant circuit 330 is connected in parallel to the switched capacitance circuit 320 and comprises a resonant inductor L_{R}, a resonant capacitor C_{R}, and a first winding of a transformer Tr, all connected in series with each other. The inductor L_{R} may be formed at least in part by the parasitic inductance of the transformer Tr.

The rectifier/inverter circuit 340 is connected to a second winding of the transformer Tr and is configured to convert a high-frequency current in the second winding to a DC current and/or vice versa. The rectifier/inverter circuit 340 may comprise two switching elements S5 and S6 and two capacitors C_{R1} and C_{R2} in a bridge configuration. The rectifier/inverter circuit 340 may also be provided with a different configuration, such as with four switching elements S5-S8 in bridge configuration for full-wave rectification, as shown in Fig. 4A, or with two switching elements S5-S6 and a centre tap to the secondary winding for half-wave rectification as shown in Fig. 4B. In a situation where the power converter is only operated in the forward direction, i.e. for converting an AC voltage to a DC voltage, switching elements may be replaced by diodes for passive rectification.

The second filter 350 is a low-pass filter that connects the rectifier/inverter circuit 340 with the DC side of the power converter. The second filter may comprise a filter inductance L2 and a filter capacitance C2. The cut-off frequency of the second filter is lower than the resonant frequency of the resonant circuit 330 in order to isolate the DC side from the high-frequency switching current.

A controller (not shown) controls a switching operation of switching elements S1-S6. Depending on the state of switching elements S1-S4, the capacitor C1 may be connected in two different configurations to the resonant circuit, namely in parallel in forward direction and in parallel in reverse direction, thereby applying either a positive voltage V_{AB} = V_{C1} or a negative voltage V_{AB} = -V_{C1} to the resonant circuit, wherein V_{C1} is the voltage across capacitor C1. Depending on the state of switching elements S1-S4, the capacitor C1 may also be disconnected from the resonant circuit and/or the nodes A and B may be connected directly, thus applying zero voltage (or a shunt) to the resonant circuit.

With appropriate control of the switching elements S1-S4, the controller can modulate a low-frequency component and a high-frequency component of the voltage V_{AB} independently of each other. The low-frequency component may correspond to the frequency of the input AC voltage, e.g., to 50 Hz or 60 Hz. The high-frequency component may correspond to the resonant frequency of the resonant circuit 330, which is typically in the range of tens of kHz to hundreds of kHz. Different modulation schemes may be used for this purpose, including pulse-width modulation or delta-sigma modulation for controlling the low-frequency component and frequency modulation or phase-shift modulation for controlling the high-frequency component.

By modulating the low-frequency component, the waveform of the input current can be controlled. Hence, power factor correction may be performed by controlling the input current such that its phase and frequency corresponds the waveform of the input AC voltage.

By modulating the high-frequency component, resonant transfer of energy from the input side to the output side via the resonant circuit and the transformer can be controlled. Hence, the DC voltage at the output side can be regulated.

The switching elements S5-S6 of the rectifier/inverter circuit 340 may be controlled in accordance with the high-frequency current flowing through the transformer Tr so as to perform synchronous rectification.

So far, a forward operation of the power converter has been described, in which an input AC voltage is converted into an output DC voltage. However, the operation of the power converter is fully reversible, so that energy may also be transferred from the DC side to the AC side. During a reverse operation, a DC voltage is input at the DC side and converted into an AC voltage provided at the AC side. To this end, the controller controls the switching operation of the switching elements S5-S6 so as to operate as an inverter for converting the input DC voltage into a high-frequency AC voltage with a frequency in the range of the resonant frequency of resonant circuit 330. The controller further controls the switching operation of the switching elements S1-S4. Specifically, a high-frequency switching operation is performed such that the switched capacitance circuit operates as a synchronous rectifier for charging the capacitance C1. At the same time, the low-frequency component of the switching operation is modulated such that a low-frequency AC voltage with a desired frequency and phase is provided, via the first filter 310, at the AC side of the converter.

Figure 5 shows a circuit diagram of an AC/DC power converter according to a second embodiment of the invention. This embodiment differs from the first embodiment only with regard to the configuration of the switched capacitance circuit, in which two switching elements S1-S2 are provided in half-bridge configuration with two capacitors C1a and C1b. Depending on the switching state of switching elements S1-S2, either capacitor C1a or capacitor C1b (or none of them) is connected in parallel to the resonant circuit 330. During operation, switching elements S1a and S1b are controlled such that capacitors C1a and C1b are charged to substantially the same voltage but with different polarity. The polarity of the switching elements (bulk diode) and/or the capacitors is adapted accordingly. Hence, depending on the switching state of switching elements S1-S2, either a positive voltage or a negative voltage is applied to the resonant circuit 330.

Similar to the first embodiment, the controller can modulate a low-frequency component and a high-frequency component of the voltage V_{AB} applied to the resonant circuit independently of each other. By modulating the low-frequency component, the waveform of the input current can be controlled. Hence, power factor correction may be performed by controlling the input current such that its phase and frequency corresponds the waveform of the input AC voltage. By modulating the high-frequency component, resonant transfer of energy from the input side to the output side via the resonant circuit and the transformer can be controlled. Hence, the DC voltage at the output side can be regulated.

Due to the half-bridge configuration, the capacitors C1a and C1b need to provide a capacitance that is significantly larger than that of the capacitor C1 of the first embodiment for the same output power. Nevertheless, the circuit topology shown in Fig. 5 has the advantage that the number of switching elements is even further reduced as compared to the first embodiment, thus reducing costs for low-power converters, where costs of extra switches are higher than costs of extra capacitances C1a and C1b.

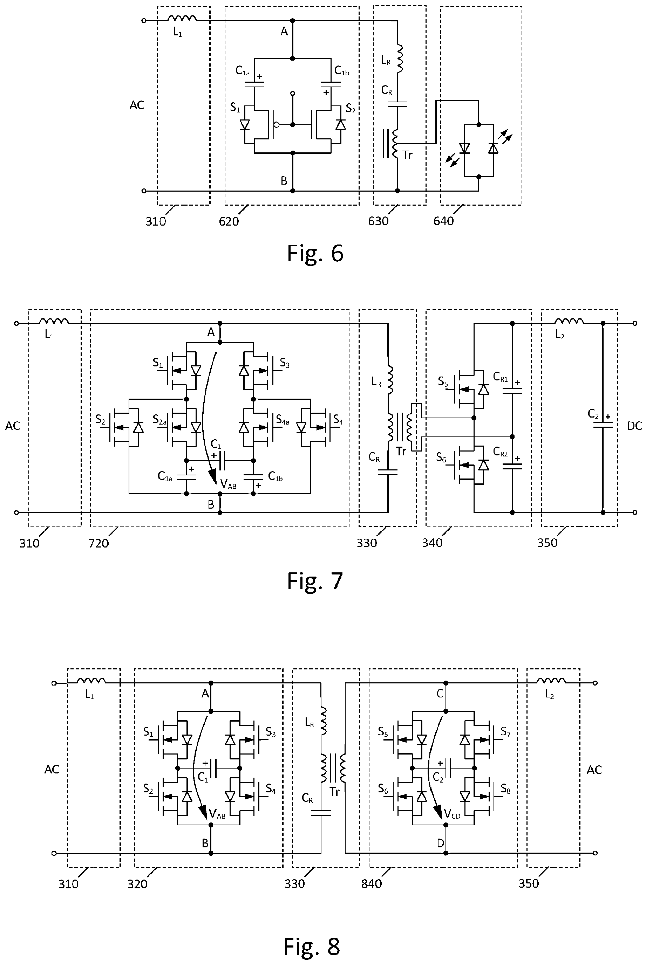

Figure 6 shows a circuit diagram of a power converter with a switched capacitance circuit according to a third embodiment of the invention. This embodiment differs from the second embodiment in that a PMOS and an NMOS with a common gate driver are used as the switching elements in the switched capacitance circuit 620. Moreover, an autotransformer Tr, i.e., a transformer with a single winding and three taps, is used in the resonant circuit 630. This configuration may provide a cost-effective alternative for low-power applications (1 W - 20 W), in particular for driving LEDs 640, thus obviating also the need for a dedicated rectifier stage.

Figure 7 shows a circuit diagram of an AC/DC power converter according to a fourth embodiment of the invention. This invention differs from the first invention in that the switched capacitance circuit 720 is configured to apply more than two different voltage levels to the resonant circuit 330. This is achieved by increasing the number of capacitors and switching elements in the switched capacitor circuit so that either one capacitor or a series connection of two or more capacitors is connected in parallel to the resonant circuit, depending on switching states.

This particular configuration has the advantage that storage capacitor C1 can be operated in a range of 800 V - 1.2 kV while each switching element does not have to withstand more than 650 V, thus allowing the use of cost-effective 650 V Si MOSFETs instead of 1.2 kV switches.

Figure 8 shows a circuit diagram of a symmetric AC/AC power converter according to a fifth embodiment of the invention. This embodiment is similar to the first embodiment, except that the rectifier/inverter circuit is replaced by a second switched capacitance circuit. In this manner, a symmetric, bidirectional AC/AC converter is provided.

During forward operation, the switching elements S1-S4 of the first switched capacitance circuit 320 are controlled so as to perform PFC and resonant energy transfer via the resonant circuit 330, as explained in conjunction with the forward operation of the first embodiment. At the same time, the switching elements S5-S8 of the second switched capacitance circuit 840 are controlled so as to perform synchronous rectification for charging the capacitor C2 and to provide a low-frequency AC voltage with a desired frequency and phase, as explained in conjunction with the reverse operation of the first embodiment.

The operation of the AC/AC power converter according to this embodiment is fully reversible. During a reverse operation, an AC voltage input at the second filter 350 is converted into another AC voltage output at the first filter 310, wherein the role of the first and the second switched capacitance circuits for performing PFC and synchronous rectification are simply exchanged.

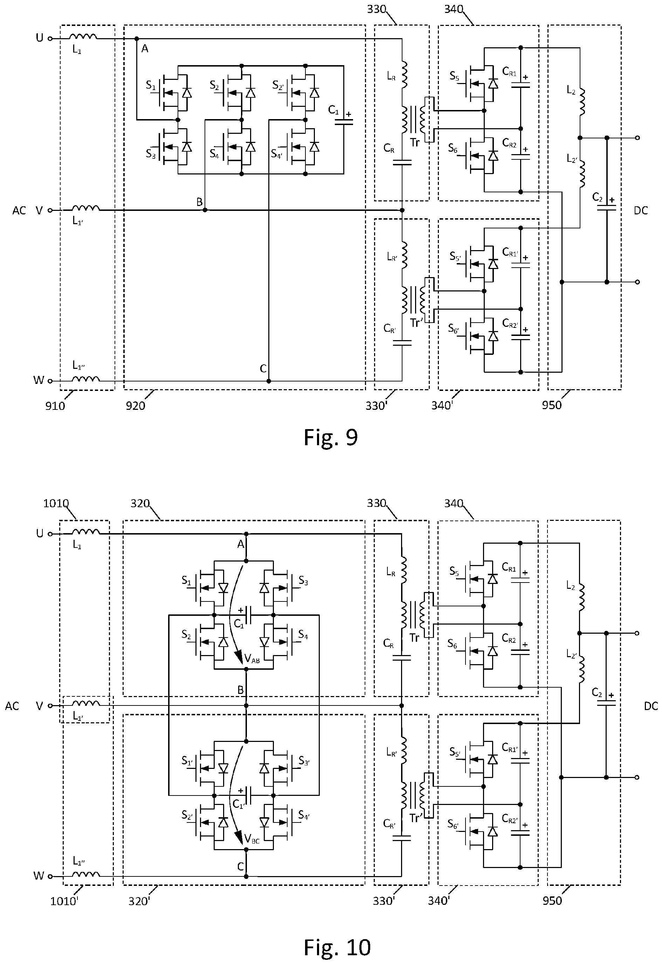

Figures 9 and 10 show a circuit diagram of a three-phase AC/DC power converter with a switched capacitance circuit according to a sixth embodiment of the invention. The circuit diagrams of Fig. 9 and 10 are equivalent, provided that a capacitance of C1 in Fig. 9 corresponds to a sum of capacitances C1 and C1' in Fig 10, and that switches S1' and S3' in Fig. 10 are driven with the same gate signal as switching elements S2 and S4, respectively.

The sixth embodiment is similar to the first embodiment, except that additional filters, an additional resonant circuit, and an additional rectifier/inverter circuit are provided in order to handle the third phase of the AC voltage. Moreover, the switched capacitance circuit 920 is not only configured to selectively connect the capacitor C1 to the first resonant circuit L_{R}/C_{R} in at least two different configurations, but also to the second resonant circuit L_{R}'/C_{R}'. The switched capacitance circuit 920 is thus provided with additional switching elements S2' and S4'.

As shown in Fig. 9, the three-phase AC/DC power converter comprises a low-pass filter 910 connected between AC terminals U, V, W and circuit nodes A, B, C. The three-phase AC/DC power converter further comprises the switched capacitance circuit 920, two resonant circuits 330 and 330', two rectifier/inverter circuits 340 and 340', and another low-pass filter 950.

The low-pass filter 910 is similar to that of the first embodiment and is adapted to isolate the AC side from the high-frequency switching current in the resonant circuits 330 and 330'. Although low pass filter 910 may be realized with a reactor L1, L1' and L1" in each of the three AC power lines U, V, and W, it may also be conceptualized as two four-pole filters 1010 and 1010' connected between AC terminals U, V, and Wand circuit nodes A, B, and C; cf. Fig. 10. Low-pass filter 1010, for instance, is a fourpole with a first port connected to AC terminals U and V and a second port connected to circuit nodes A and B. Similarly, low-pass filter 1010' is a fourpole with a first port connected to AC terminals V and W and a second port connected to circuit nodes B and C. From this perspective, each of low-pass filter 1010 and 1010' is substantially identical to low-pass filter 310 of the first embodiment.

The switched capacitance circuit 920 comprises at least one capacitor C1 and a plurality of switching elements S1-S4, S2', S4' for connecting the at least one capacitor C1 in different configurations to the first resonant circuit 330 and/or the second resonant circuit 330', thereby applying either a positive or a negative voltage to the respective resonant circuit. Different circuit topologies may be used for implementing the switched capacitance circuit. Apart from the full-bridge configuration shown in Fig. 9, also the half-bridge configuration described in conjunction with the second and the third embodiment, or the multi-level inverter topology as described in conjunction with the fourth embodiment may be used. Fig. 10 shows that the 3-phase full-bridge configuration in Fig. 9 is equivalent to two 2-phase full-bridge circuits according to the first embodiment. This relationship between a switched capacitance circuit for a 3-phase converter (or more generally an *n*-phase converter with *n* > 2) and two or more switched capacitance circuits for a 2-phase converter can be used for deriving a specific circuit topology for a switched capacitance circuit for an *n*-phase converter from the switched capacitance circuits disclosed in connection with the other embodiments.

The two resonant circuits 330, 330' and the two rectifier/inverter circuits 340, 340' are similar to the resonant circuit and the rectifier/inverter circuit described in connection with the first embodiment.

The low-pass filter 950 basically consists of two low-pass filters L2/C2 and L2'/C2 for filtering and combining the output of each of the two rectifier/inverter circuits 340, 340' into a single DC voltage. Apart from the combining aspect, the functionality of this filter is similar to that of the second filter 350 described in connection with the first embodiment, namely isolating the DC side from the high-frequency switching voltages in resonant circuits 330 and 330'. Therefore, the cut-off frequency of low-pass filter 950 is set lower than the resonant frequency of resonant circuits 330 and 330'.

Other configurations for filter 950 may be used. For instance, filter 950 may be replaced by two independent low-pass filter for providing two independent, and potentially different, DC voltages generated by stages 330/340 and 330'/340', respectively.

Summarizing, a new topology for bidirectional resonant AC/DC or AC/AC converters is disclosed. Said converters have a plurality of different applications, including switched power supplies, uninterruptible power supplies (UPS), solar inverters, variable-frequency drives, LED drivers, etc., with power requirements ranging from a few W to several kW, including single phase and three-phase applications.

As compared to the conventional AC/DC converter shown in Fig. 2, the new converter topology has the advantage that the switched capacitance circuit is connected in parallel to the resonant circuit and the transformer, i.e., as a shunt rather than in series with the load current. Therefore, the total current passing though the switching elements is significantly reduced, allowing for smaller and more cost-effective components.

Moreover, the storage capacitor in the switched capacitance circuit according to the present invention is operated at high voltages, thus allowing the use of polypropylene capacitors instead of comparatively short-life aluminium capacitors or expensive high-capacity ceramic capacitors.

Finally, since the resonant capacitor C_{R} is connected in series to the transformer Tr, the transformer and therewith the DC side is isolated against the low-frequency voltage at the AC side, thus obviating the need for an additional energy storage capacitor at the output filter stage. Therefore, the capacitor in the switched capacitance circuit is the only significant energy storage in the system, thus simplifying the design of the converter and reducing costs. Moreover, by not passing an undesirable extra current though the transformer, the transformer current becomes a function of only the load current, thus reducing current variations and losses in the transformer and the rectifier circuit.

## Claims

1. A resonant power converter for converting a first voltage to a second voltage and/or vice versa, the first voltage being provided between a first terminal and a second terminal, the second voltage being provided between a third terminal and a fourth terminal, the power converter comprising:
a resonant circuit (330) comprising a resonant inductance (L_{R}) and a resonant capacitance (C_{R}) connected in series between a first node (A) and a second node (B);
a first low pass filter (310) with a first port connected to the first and the second terminals and a second port connected to the first and the second nodes (A, B), the first low pass filter (310) having a cut-off frequency lower than a resonant frequency of the resonant circuit (330);
a first switched capacitance circuit (320) comprising at least one capacitor (C1) and a plurality of switches (S1, ..., S4) configured for selectively connecting the at least one capacitor (C1) in at least either one of a first configuration and a second configuration to the first node (A) and the second node (B), thereby applying at least either one of a positive voltage and a negative voltage to the resonant circuit (330), the positive voltage and the negative voltage being based on a charge stored in the at least one capacitor (C1);
a rectifier/inverter circuit (340) for converting a resonant AC current flowing through the resonant circuit (330) into the second voltage and/or vice versa;
a transformer (Tr) for coupling the resonant circuit (330) and the rectifier/inverter circuit (340); and
a controller for controlling the plurality of switches (S1, ..., S4),
wherein the first voltage is an AC voltage with a first frequency lower than the resonant frequency of the resonant circuit (330) and the second voltage is a DC voltage or an AC voltage with a second frequency lower than the resonant frequency of the resonant circuit (330).

2. A power converter according to claim 1,
wherein the plurality of switches (S1, ..., S4) and the at least one capacitor (C1) of the first switched capacitance circuit (320) are connected in a full-bridge configuration with a first branch of a first switch (S1) and a second switch (S2) connected in series and a second branch of a third switch (S3) and a fourth switch (S4) connected in series, each of the first branch and the second branch being connected in parallel to the resonant circuit (330), and the at least one capacitor (C1) being connected between a centre node of the first branch and a centre node of the second branch.

3. A power converter according to claim 1,
wherein the plurality of switches (S1, S2) and the at least one capacitor (C1a, C1b) of the first switched capacitance circuit (520) are connected in a half-bridge configuration with a first branch of a first switch (S1) and a first capacitor (C1a) connected in series and a second branch of a second switch (S2) and a second capacitor (C1b) connected in series, each of the first branch and the second branch being connected in parallel to the resonant circuit (330).

4. A power converter according to claim 1,
wherein the plurality of switches and the at least one capacitor of the first switched capacitance circuit are connected in a 3-level inverter configuration in which the at least one capacitor comprises a first capacitor (C1) and a second capacitor (C1a) connected in series, and in which the plurality of switches (S1, ... , S4, S2a, S4a) is further configured for selectively connecting the first capacitor (C1) and the second capacitor (C1a) in either one of a third configuration in which the first capacitor (C1) is connected in parallel to the resonant circuit and a fourth configuration in which the series connection of the first capacitor (C1) and the second capacitor (C1a) is connected in parallel to the resonant circuit.

5. A power converter according to any of the preceding claims, wherein the plurality of switches (S1, ..., S4, S2a, S4a) of the first switched capacitor circuit (320, 720) is further configured for selectively connecting the first node (A) and the second node (B), thereby applying zero voltage to the resonant circuit (330).

6. A power converter according to any one of claims 1 to 5,
wherein the rectifier/inverter circuit (340a) comprises four switches (S5, ..., S8) in a full-bridge configuration; and
wherein the controller is further configured to control the switches (S5, ..., S8) of the rectifier/inverter circuit (340a) to convert the resonant AC current flowing through the resonant circuit (330) into a DC current and/or vice versa.

7. A power converter according to any one of claims 1 to 5,
wherein the rectifier/inverter circuit comprises two switches (S5, S6) and two capacitors (C_{R1}, C_{R2}) in a half-bridge configuration; and
wherein the controller is further configured to control the switches (S5, S6) of the rectifier/inverter circuit to convert the resonant AC current flowing through the resonant circuit into a DC current and/or vice versa.

8. A power converter according to any one of claims 1 to 5,
wherein the rectifier/inverter circuit comprises a second switched capacitance circuit (840) connected to the transformer (Tr), the second switched capacitance circuit (840) comprising at least one capacitor (C2) and a plurality of switches (S5, ..., S8) configured for selectively connecting the at least one capacitor (C2) in either one of a first configuration and a second configuration to the transformer (Tr), thereby applying either one of a positive voltage and a negative voltage to the transformer (Tr), the positive voltage and the negative voltage being based on a charge stored in the at least one capacitor (C2);
wherein the controller is further configured to control the plurality of switches (S5, ..., S8) of the second switched capacitance circuit (840) to convert the resonant AC current flowing through the resonant circuit (330) into an AC current having the second frequency and/or vice versa.

9. A power converter according to claim 8, wherein the plurality of switches (S5, ..., S8) and the at least one capacitor (C2) of the second switched capacitance circuit (820) are connected in either one of the half-bridge configuration, the full-bridge configuration, and the 3-level inverter configuration.

10. A power converter according to any of the preceding claims, further comprising a second low pass filter (350) with a first port connected to the rectifier/inverter circuit (340) and a second port connected to the third and the fourth terminals, the second low pass filter (350) having a cut off frequency lower than a resonant frequency of the resonant circuit (330).

11. A power converter according to any of the preceding claims, wherein the controller is configured to control the plurality of switches (S1, ..., S4) of the first switched capacitance circuit (320) and/or the plurality of switches (S5, ..., S8) of the second switched capacitance circuit (840) so as to modulate a low frequency component of the applied voltage and a high frequency component of the applied voltage independently of each other.

12. A power converter according to any of the preceding claims, wherein the controller is further configured to perform power factor control by controlling the plurality of switches (S1, ..., S4) of the first switched capacitance circuit (320) in accordance with a phase and frequency of the first voltage.

13. A power converter according to any of the preceding claims, wherein the controller is further configured to control the plurality of switches (S1, ..., S4) of the first switched capacitance circuit (320) and/or the plurality of switches (S5, ..., S8) of the second switched capacitance circuit (840) so as to drive the resonant circuit (330) by modulating a high frequency component of the applied voltage in accordance with the resonant frequency of the resonant circuit (330).

14. A power converter according to any of the preceding claims, the power converter further comprising:
a second resonant circuit (330') comprising a resonant inductance (L_{R}') and a resonant capacitance (C_{R}') connected in series between the second node (B) and a third node (C);
a third low pass filter (1010') with a first port connected to the second terminal (V) and a fifth terminal (W) and a second port connected to the second and the third nodes (B, C), the third low pass filter (1010') having a cut-off frequency lower than a resonant frequency of the second resonant circuit;
a second rectifier/inverter circuit (340') for converting a resonant AC current flowing through the second resonant circuit (330') into a third voltage and/or vice versa; and
a second transformer (Tr') for coupling the second resonant circuit (330') and the second rectifier/inverter circuit (340');
wherein the plurality of switches (S1, ..., S4, S2', S4') of the first switched capacitance circuit (920) is further configured for selectively connecting the at least one capacitor (C1) in at least either one of a fourth configuration and a fifth configuration to the second node (B) and the third node (C), thereby applying at least either one of a positive voltage and a negative voltage to the second resonant circuit (330'), the positive voltage and the negative voltage being based on a charge stored in the at least one capacitor (C1),
wherein the first voltage is a three-phase AC voltage provided at the first terminal (U), the second terminal (V), and the fifth terminal (W).
